# EUROPÄISCHE PATENTSCHRIFT

(11) **EP 2 623 363 B1**
(45) Veröffentlichungstag und Bekanntmachung des Hinweises auf die Patenterteilung: **28.12.2022**
(21) Anmeldenummer: 13151467.1
(22) Anmeldetag: 16.01.2013
(51) Int. Cl.: B60L 53/24, H02M 7/00, H02M 3/22, H02M 1/34, H02M 1/42, H02M 7/48

(54) **Vorrichtung und Verfahren zum Laden einer Traktionsbatterie eines Elektrofahrzeugs**
Apparatus and method for charging a traction battery of an electric vehicle
Dispositif et procédé de chargement d'une batterie de traction d'un véhicule électrique

(30) Priorität: 31.01.2012 DE 102012001716; 16.07.2012 DE 102012014178
(43) Veröffentlichungstag der Anmeldung: 07.08.2013
(73) Patentinhaber: Volkswagen Aktiengesellschaft, 38440 Wolfsburg (DE)
(72) Erfinder: Zarate Vargas, Oneil Rodrigo, 38436 Wolfsburg (DE); Wetzel, Hermann, 38448 Wolfsburg (DE); Plikat, Dr. Robert, 29369 Ummern (DE)

(56) Entgegenhaltungen:
- AU-A1- 2010 276 262
- DE-A1-102009 000 096
- FR-A1- 2 946 810
- FR-A1- 2 961 965
- US-A1- 2012 019 173
- YAMAMOTO M ET AL: "Three phase voltage-fed space vector modulated soft-switching PFC rectifier with instantaneous power feedback scheme", 7TH. INTERNATIONAL CONFERENCE ON POWER ELECTRONICS AND VARIABLE SPEED DRIVES. PEVD'98. LONDON, SEPT. 21 -23, 19; [IEE CONFERENCE PUBLICATION NO. 456], LONDON : IEE, UK, 21. September 1998 (1998-09-21), Seiten 92-98, XP006504884, DOI: 10.1049/CP:19980506 ISBN: 978-0-85296-704-1
- HIRAKI E ET AL: "Feasible performance evaluations of active resonant snubber-assisted three phase soft switching inverter", POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, Bd. 2, 27. Juni 1999 (1999-06-27), Seiten 999-1004, XP010346804, DOI: 10.1109/PESC.1999.785633 ISBN: 978-0-7803-5421-0
- LUIS DE SOUSA ET AL: "A combined multiphase electric drive and fast battery charger for Electric Vehicles", VEHICLE POWER AND PROPULSION CONFERENCE (VPPC), 2010 IEEE, IEEE, 1. September 2010 (2010-09-01), Seiten 1-6, XP031929193, DOI: 10.1109/VPPC.2010.5729057 ISBN: 978-1-4244-8220-7
- DAVID THIMMESCH: "An SCR Inverter with an Integral Battery Charger for Electric Vehicles", IEEE TRANSACTIONS ON INDUSTRY APPLICATIONS, IEEE SERVICE CENTER, PISCATAWAY, NJ, US, vol. IA-10, no. 4, 1 July 1985 (1985-07-01), pages 1023-1029, XP011178408, ISSN: 0093-9994

## Beschreibung

Die Erfindung betrifft eine Vorrichtung und ein Verfahren zum Laden mindestens einer Traktionsbatterie eines Elektrofahrzeugs.

In elektrischen Fahrzeugen, die zumindest teilweise elektrisch betrieben werden, ist ein Energiespeicher, beispielsweise ein Akkumulator oder eine Traktionsbatterie notwendig, um elektrische Energie für einen Fahrbetrieb zu speichern. Es ist erforderlich, diesen Energiespeicher aufzuladen.

Unter einem Elektrofahrzeug sind dabei alle Fahrzeuge zu verstehen, deren Traktionsbatterie mittels externer elektrischer Versorgung aufladbar ist. Neben reinen Elektrofahrzeugen trifft es auch auf Hybridfahrzeuge, wie etwa so genannte Plug-in-Hybridfahrzeuge oder Range Extender zu.

Im Stand der Technik sind Elektrofahrzeuge der genannten Art bekannt, die mindestens aufweisen:
- eine mit Gleichspannung aufladbare bzw. eine Gleichspannung bereitstellende Traktionsbatterie,
- einen mit Wechselspannung betreibbaren Traktions-Elektromotor,
- einen Stromrichter, der im motorischen Betrieb als Antriebswechselrichter zur Umwandlung der Batterie-Gleichspannung in Wechselspannung für den Elektromotor sowie im generatorischen Betrieb als Gleichrichter zur Umwandlung der vom Elektromotor erzeugten Wechselspannung in eine Gleichspannung zum Laden der Traktionsbatterie fungiert,
- ein Ladegerät zur Umwandlung der ein- oder mehrphasigen Wechselspannung des Versorgungsnetzes in eine Gleichspannung zum Laden der Traktionsbatterie.

Weiterhin sind im Stand der Technik Vorrichtungen und Verfahren zum Laden der Traktionsbatterien eines Elektrofahrzeugs bekannt, bei denen das Ladegerät eingespart wird. Für die Gleichrichtung der Wechselspannung des Versorgungsnetzes und/oder die Anpassung der Höhe der Gleichspannung (DC/DC-Wandlung) wird der Antriebswechselrichter sowie die Motorwicklungen (Induktivitäten) verwendet. Hierzu müssen jedoch zusätzliche Anschlüsse an den Motorwicklungen bzw. dem Sternpunkt des Elektromotors vorgesehen werden. Da die Motorwicklungen im Ladebetrieb bestromt werden, müssen Sicherheitsvorkehrungen gegen ein unbeabsichtigtes Drehen des Elektromotors getroffen werden. Weiterhin muss die Leistungselektronik des Stromrichters für die erhöhte Betriebsdauer ausgelegt werden.

So offenbart die DE 10 2009 000 096 A1 ein Verfahren für die Steuerung einer Stromversorgungseinrichtung für mindestens eine elektrische Maschine, mit mindestens einer Speichereinrichtung für elektrische Energie und mit einem mindestens eine Drossel umfassenden Wechselrichter, wobei der Wechselrichter in Doppelfunktion für die Ladung der Speichereinrichtung aus einem insbesondere ortsfesten Stromnetz und für die Versorgung der elektrischen Maschine im Fahrbetrieb mit Wechselstrom vorgesehen ist, wobei für den Ladebetrieb eine Soll-Ladeleistung vorgegeben wird. Weiter stellt der Wechselrichter den Drosselstrom für einen dreiphasigen Betrieb gemäß vorgegebener Beziehungen und für den einphasigen Betrieb gemäß vorgegebener Beziehungen ein.

Die DE 103 38 161 A1 offenbart eine Spannungsverarbeitungseinrichtung für ein Kraftfahrzeug, die einen Stromrichter zur Umwandlung von Gleichspannung und Wechselspannung umfasst, wobei der Wandler für bidirektionale Umwandlung ausgelegt ist.

Die WO 93/01650 A1 offenbart ein Verfahren zum Betrieb eines Wechselrichters eines Drehstromantriebs eines Elektroautos als fahrzeugseitiges Bordladegerät. Hierbei werden während eines Ladebetriebs zwei Brückenzweige dieses Wechselrichters derart als Hochsetzsteller geregelt, dass in Abhängigkeit einer netzfreundlichen Einspeisung eine Gleichspannung auf einen Zwischenkreiskondensator des Wechselrichters eingeprägt wird und wobei ein weiterer Brückenzweig dieses Wechselrichters derart als Tiefsetzsteller geregelt wird, dass in Abhängigkeit einer Ladecharakteristik einer Fahrbatterie des Elektroautos dieser ein Ladestrom aus dem Zwischenkreiskondensator eingeprägt wird.

Die DE 10 2009 000 096 A1 offenbart ein Verfahren für die Steuerung einer Stromversorgungseinrichtung mit einem Wechselrichter.

Die AU 2010 276 262 A1 offenbart einen Null-Spannungs-Übergang weichschaltenden Umrichter zum Umwandeln einer Gleichspannung.

Das Dokument "D. Thimmesch: An SCR Inverter with an Integral Battery Charger for Electric Vehicles", IEEE Transactions on Industry Applications, IEEE Service Center, Piscataway, NJ, US Bd. IA-10, Nr. 4, 1. Juli 1985, Seiten 1023-1029, XP011178408, ISSN:0093-9994" offenbart, dass ein Batterieladegerät in einen Stromrichter integriert ist.

Die FR 2 946 810 A1 offenbart ein reversibles Schnellladegerät für Elektrofahrzeuge.

Die FR 2 961 965 A1 offenbart eine Ladevorrichtung auf dem Gebiet von Elektroautos.

Es ist wünschenswert, eine Leistungsdichte von Ladegeräten, insbesondere so genannten On-Bord-Ladegeräten, zum Laden von Traktionsbatterien zu erhöhen. Auch ist es wünschenswert, ein induktives Laden einer Traktionsbatterie zu ermöglichen.

Es stellt sich das technische Problem, ein Verfahren und eine Vorrichtung zum Laden mindestens einer Traktionsbatterie eines Elektrofahrzeuges zu schaffen, welche ein Laden der Traktionsbatterie mit einer hohen Leistungsdichte ermöglichen, wobei gleichzeitig Bauraumund Gewichtsanforderungen reduziert werden.

Die Lösung des technischen Problems ergibt sich durch die Gegenstände mit den Merkmalen der Ansprüche 1 und 7. Weitere vorteilhafte Ausgestaltungen der Erfindung ergeben sich aus den Unteransprüchen.

Vorgeschlagen wird eine Vorrichtung zum Laden mindestens einer Traktionsbatterie eines Elektrofahrzeugs. Die Traktionsbatterie bezeichnet hierbei einen Energiespeicher des Elektrofahrzeuges, aus dem elektrische Energie zum Betrieb des Elektrofahrzeugs entnommen werden kann. Die Vorrichtung umfasst mindestens einen Traktionsbatterieanschluss, einen Leistungsstromrichter und mindestens einen Motoranschluss. An den Traktionsbatterieanschluss ist die Traktionsbatterie angeschlossen. An den mindestens einen Motoranschluss ist eine Elektromaschine, beispielsweise eine dreiphasige Elektromaschine, angeschlossen, wobei die Elektromaschine zum Antrieb des Elektrofahrzeuges dient.

Der Leistungsstromrichter bezeichnet hierbei einen Stromrichter, der als Wechselrichter betrieben werden kann, wobei der Wechselrichter eine Gleichspannung in eine Wechselspannung umwandelt. Auch kann der Stromrichter als Gleichrichter betrieben werden, der eine Wechselspannung in eine Gleichspannung umwandelt. Teilweise wird ein derartiger Stromrichter auch als Umrichter bezeichnet.

Erfindungsgemäß weist der Leistungsstromrichter mindesten eine Kommutierungsschaltung auf. Die Kommutierungsschaltung ist derart schaltungstechnisch angeordnet, dass sie eine Schaltung von Leistungsschaltern des Leistungsstromrichters mit Null-Spannung und/oder Null-Strom ermöglicht. Als Stromrichter in Elektrofahrzeugen kommen in der Regel hart geschaltete Pulswechselrichter zum Einsatz. Es sind jedoch Kommutierungsschaltungen bekannt, mittels derer ein stromfreies Schalten (Null-Strom-Schaltung bzw. Zero Current Switching) und/oder ein spannungsfreies Schalten (Null-Spannung-Schaltung bzw. Zero Voltage Switching) ermöglicht wird. Ein derartiger Schaltvorgang wird dann als so genanntes weiches Schalten (Soft Switching) bezeichnet.

Der Leistungsstromrichter kann hierbei ein dreiphasiger Leistungsstromrichter sein. Hierbei kann der Leistungsstromrichter drei Halbbrücken umfassen, wobei eine Halbbrücke jeweils einen so genannten Highside-Schalter und einen Lowside-Schalter umfasst. Diese Halbbrücken können auch als Leistungshalbbrücken bezeichnet werden. Die Schalter können hierbei z.B. als MOSFETs oder als IGBTs ausgebildet sein. Hierbei bezeichnet der Highside-Schalter einen Leistungsschalter oder Leistungstransistor, der mit einem Ausgangsspannungspotential der Traktionsbatterie verbunden werden kann bzw. im Betrieb verbunden ist. Der Lowside-Schalter bzw. Lowside-Transistor ist hierbei mit einem Null-Potential oder Massepotential elektrisch verbunden. Eine schaltungstechnische Verbindung zwischen dem Highside-Schalter und dem Lowside-Schalter kann auch als Mittelpunkt der Leistungshalbbrücke bezeichnet werden.

Durch den Einsatz einer Kommutierungsschaltung können Schaltverluste beim Betrieb des Leistungsstromrichters, z.B. in einem motorischen Betrieb, verringert und somit ein Wirkungsgrad des Leistungsstromrichters, insbesondere bei hohen Schaltfrequenzen des Leistungsstromrichters bzw. dessen Schalter, erhöht werden. Die elektromagnetische Störausstrahlung der Leistungselektronik kann dadurch ebenfalls reduziert werden.

Vorzugsweise ist die Kommutierungsschaltung als ein resonantes Netzwerk mit einer vorbestimmten Resonanzfrequenz ausgebildet. Ein resonantes Netzwerk besteht hierbei aus mindestens einem induktiven und mindestens einem kapazitiven Element. Durch ein Schwingen der als resonantes Netzwerk ausgebildeten Kommutierungsschaltung kann somit ein Strom durch einen Leistungsschalter, beispielsweise einen Highside-Schalter, oder ein Spannungsabfall bzw. die Spannung über einen Leistungsschalter, beispielsweise über dem Highside-Schalter, auf Null reduziert werden.

Weiter ist mittels der mindestens einen Kommutierungsschaltung eine externe Wechselspannung oder eine externe Gleichspannung in mindestens eine Gleichspannung zum Laden der Traktionsbatterie umwandelbar. In einem Ladebetrieb wird die Kommutierungsschaltung somit z. B. als ein Ladestromrichter oder Ladeumrichter betrieben werden, der eine externe Wechselspannung oder Gleichspannung in eine Gleichspannung in einer gewünschten Höhe zum Laden der Traktionsbatterie umwandelt. Ein Ladestromrichter oder Ladeumrichter kann hierbei mindestens ein induktives Element und mindestens zwei elektronische Schaltelemente, z.B. Transistoren, umfassen. Hierbei ist es wünschenswert, dass eine Welligkeit eines Ladestroms begrenzt ist, z.B. auf 20 % eines Nenn-Ladestroms. Um eine Stromwelligkeit zu begrenzen, ist es erforderlich, dass das induktive Element des Ladestromrichters oder des Ladeumrichters, z.B. eines Hochsetzstellers, eine gewisse Induktivität aufweist. Hierbei gilt, dass die Stromwelligkeit mit steigender Induktivität des induktiven Elements abnimmt. Beim Betrieb des Leistungsstromrichters oder einzelner Leistungshalbbrücken des Leistungsstromrichters als Ladestromrichter oder Ladeumrichter sind daher in der Regel große Ladeanschlussinduktivitäten, die die entsprechende Leistungshalbbrücke mit einem Netzanschluss koppeln, notwendig, um eine gewünschte Stromwelligkeit zu erreichen. Die Ladeanschlussinduktivitäten benötigen hierbei viel Bauraum und haben hohe Herstellungskosten.

Die Vorrichtung umfasst hierbei auch die Traktionsbatterie, wobei die Traktionsbatterie an dem mindestens einen Traktionsbatterieanschluss angeschlossen ist.

Vorzugsweise weist ein Leistungsstromrichter, dessen Leistungsschalter als MOSFET ausgebildet sind, eine Kommutierungsschaltung auf, die als Null-Spannung-Schaltung ausgebildet ist. Ein Leistungsstromrichter, dessen Leistungsschalter als IGBT ausgebildet sind, weist vorzugsweise eine Kommutierungsschaltung auf, die als Null-Strom-Schaltung ausgebildet ist.

Die vorgeschlagene Vorrichtung ermöglicht in vorteilhafter Weise die Transformation einer externen Spannung in eine Ladespannung, ohne dass hierzu die Leistungsschalter des Leistungsstromrichters benötigt werden. Durch die Doppelnutzung der mindestens einen Kommutierungsschaltung, einmal zum Kommutieren der Leistungsschalter und zusätzlich zum Erzeugen der Ladespannung zum Laden der Traktionsbatterie, kann eine Verbesserung im Wirkungsgrad und einer Leistungsdichte beim Laden einer Traktionsbatterie sowie beim Betrieb der Elektromaschine in einem motorischen Betriebsmodus erfolgen.

Weiter erfindungsgemäß umfasst die Kommutierungsschaltung mindestens zwei gegengekoppelte induktive Elemente und mindestens eine erste Kommutierungshalbbrücke. Die zwei gegengekoppelten induktiven Elemente sind hierbei negativ gekoppelt, beispielsweise als negativ gekoppeltes Spulenpaar, ausgeführt sein. Die erste Kommutierungshalbbrücke kann zwei Kommutierungsschalter, die beispielsweise als elektronische Schalter, beispielsweise als MOSFET oder IGBT, ausgebildet sind, umfassen. Hierbei kann die erste Kommutierungshalbbrücke elektrisch parallel zu einer korrespondierenden Leistungshalbbrücke des Leistungsstromrichters geschaltet sein. Analog kann also auch die Kommutierungshalbbrücke einen Highside-Schalter und einen Lowside-Schalter umfassen.

Die mindestens zwei gegengekoppelten induktiven Elemente erlauben in vorteilhafter Weise eine kleinere Auslegung von Ladeanschlussinduktivitäten. Hierdurch reduziert sich in vorteilhafter Weise ein Bauraum und Kosten der Ladeanschlussinduktivitäten, wobei Ladeanschlussinduktivitäten induktive Elemente bezeichnen, die zum Koppeln von einer externen Spannungsversorgung mit dem durch die erste Kommutierungshalbbrücke und die mindestens zwei gegengekoppelten induktiven Elemente gebildeten Ladestromrichter oder Ladeumrichter genutzt werden.

In einer nicht erfindungsgemäßen Ausführungsform ist ein erstes induktives Element der gegengekoppelten Elemente als eine primäre Transformatorspule und ein zweites induktives Element der gegengekoppelten induktiven Elemente als eine sekundäre Transformatorspule ausgebildet. Hierbei kann z.B. ein Mittelpunkt der ersten Kommutierungshalbbrücke elektrisch oder schaltungstechnisch mit einem Mittelpunkt der korrespondierenden Leistungshalbbrücke verbunden sein, wobei die primäre Transformatorspule zwischen dem Mittelpunkt der Leistungshalbbrücke und dem Mittelpunkt der Kommutierungshalbbrücke angeordnet ist.

Weiter kann die Vorrichtung eine weitere Kommutierungsvollbrücke umfassen, wobei in einem Brückenzweig der Kommutierungsvollbrücke eine Sekundärspule des Transformators angeordnet ist.

An einem schaltungstechnischen Ausgang der weiteren Kommutierungsvollbrücke kann ein Gleichspannungs-Zwischenkreis eines Ladegerätes angeschlossen sein.

Hierdurch ergibt sich in vorteilhafter Weise, dass ein Laden der Traktionsbatterie mit Potentialtrennung möglich ist. Die Potentialtrennung wird hierbei durch den vorgeschlagenen Transformator erreicht.

In einer weiteren erfindungsgemäßen Ausführungsform sind ein erstes induktives Element und ein zweites induktives Element der gegengekoppelten induktiven Elemente als Teil einer Sekundär-Spule eines induktiven Ladegeräts ausgebildet. Hierbei umfasst eine Sekundärspule eines induktiven Ladegeräts zumindest zwei Teilspulen, die als gegengekoppelte induktive Elemente ausgebildet sind.

Vorzugsweise kann in dieser Ausführungsform die Kommutierungsschaltung eine weitere Kommutierungshalbbrücke umfassen, wobei die mindestens zwei gegengekoppelten Elemente in einem Brückenzweig zwischen der ersten Kommutierungshalbbrücke und der mindestens einen weiteren Kommutierungshalbbrücke geschaltet sind. Ein Ausgang der aus der ersten Kommutierungshalbbrücke und der zweiten Kommutierungshalbbrücke gebildeten Kommutierungsvollbrücke kann, beispielsweise über eine Filterschaltung, an einen Gleichspannungs-Zwischenkreis des Ladegeräts bzw. der Traktionsbatterie angeschlossen sein.

Weiter kann ein Mittelpunkt der Leistungshalbbrücke des Leistungsstromrichters elektrisch mit einem Mittelpunkt der gegengekoppelten induktiven Elemente verbunden sein.

Hierdurch ergibt sich in vorteilhafter Weise, dass ein induktives Laden der Traktionsbatterie mittels der vorgeschlagenen Vorrichtung ermöglicht wird, wobei die Kommutierungsschaltung auch in diesem Fall eine externe Spannung in eine Ladespannung der Traktionsbatterie umwandeln kann.

Weiter erfindungsgemäß umfasst die Kommutierungsschaltung mindestens eine weitere Kommutierungshalbbrücke. Die mindestens zwei gegengekoppelten Elemente sind in einem Brückenzweig zwischen der ersten Kommutierungshalbbrücke und der mindestens einen weiteren Kommutierungshalbbrücke geschaltet.

Weiter kann ein Mittelpunkt einer Leistungshalbbrücke des Leistungsstromrichters elektrisch mit einem Mittelpunkt der zwei gegengekoppelten Elemente verbunden sein.

Durch die Verwendung einer zweiten Kommutierungshalbbrücke kann eine Schaltfrequenz des durch die gegengekoppelten induktiven Elemente und die beiden Kommutierungshalbbrücken gebildeten Ladestromrichters oder Ladeumrichters weiter erhöht werden. Dies ermöglicht in vorteilhafter Weise eine weitere Reduktion einer erforderlichen Induktivität von Ladeanschlussinduktivitäten, über welche eine externe Versorgungsspannung an die vorgeschlagene Vorrichtung angeschlossen wird. Die Vorrichtung umfasst einen Netzanschluss, wobei der Netzanschluss elektrisch mit dem Mittelpunkt der gegengekoppelten induktiven Elemente verbunden ist. Hierbei ergibt sich ein Ladegerätanschluss ohne Potentialtrennung.

Die kleinere Auslegung von Ladeanschlussinduktivitäten und die damit verbundene Kosten- und Bauraumreduktion kann trotz einer Beibehaltung der vorhergehend erläuterten gewünschten Stromwelligkeit erfolgen.

Eine derart ausgestaltete oder ausgebildete Vorrichtung ermöglicht weiter in vorteilhafter Weise, dass die Kommutierungsschalter der Kommutierungsschaltung als zusätzliche Schaltbrücken des Leistungsstromrichters verwendet werden können, sodass auch dessen Schaltfrequenz verdoppelt werden kann. Hierdurch kann ein Stromoberwellengehalt reduziert und somit ein EMV-Verhalten weiter verbessert werden. Da die Halbleiter der Kommutierungsschaltungen, also die Kommutierungsschalter, nur während eines Schaltvorgangs aktiv sind, sind sie üblicherweise kompakt dimensioniert. Somit ist es vorteilhaft, die Kommutierungsschalter nur bei Teillast für eine Verdopplung der Schaltfrequenz zu verwenden. Insbesondere im Bereich eines Strom-Nulldurchgangs führt eine Verdopplung der Schaltfrequenz zu einer reduzierten Stromwelligkeit, sodass hierdurch die Motorinduktivitäten der Elektromaschine ebenfalls kleiner ausgelegt werden können. Diese Eigenschaften lassen sich ebenfalls auf stationäre Stromrichter mit Kommutierungsschaltungen übertragen.

Die Kommutierungsschalter können somit anstelle der Leistungsschalter der korrespondierenden Leistungshalbbrücke des Leistungsstromrichters schalten, um ein Strom und eine Spannung der Elektromaschine einzustellen. Umfasst die Kommutierungsschaltung zwei Halbbrücken, so kann in vorteilhafter Weise eine höhere Schaltfrequenz bei der Einstellung des Stromes und/oder der Spannung der Elektromaschine erreicht werden. Hierdurch kann in vorteilhafter Weise eine kleinere Stromwelligkeit beim Betrieb der Elektromaschine erreicht werden, wodurch sich ein EMV-Verhalten verbessert. Die Einstellung eines Stromes und/oder einer Spannung der Elektromaschine erfolgt vorzugsweise bei einem Betrieb der Elektromaschine in einem Teillast-Betriebsmodus.

In einer weiteren Ausführungsform ist ein Mittelpunkt einer Leistungshalbbrücke elektrisch mit einem Mittelpunkt der zwei gegengekoppelten induktiven Elemente verbunden. Eine Leistungshalbbrücke zeichnet hierbei eine Halbbrücke des Leistungsstromrichters, die ausschließlich die Leistungsschalter umfasst. Weiter ist zwischen dem Mittelpunkt der Leistungshalbbrücke und dem Mittelpunkt der zwei gegengekoppelten induktiven Elemente ein zusätzliches induktives Element mit einer vorbestimmten Induktivität angeordnet. Beispielsweise kann das zusätzliche induktive Element als saturierbare Spule ausgebildet sein. Die saturierbare Spule bzw. das zusätzliche induktive Element wirkt hierbei in vorteilhafter Weise als Schalter. Während eines Ladevorgangs ist das zusätzliche induktive Element nicht gesättigt und stellt somit eine große Induktivität dar, die nur einen geringen Stromfluss durch das zusätzliche induktive Element erlaubt. Während einer Kommutierung ist das zusätzliche induktive Element gesättigt und erlaubt daher einen großen Stromfluss durch das zusätzliche induktive Element. Hierdurch kann in vorteilhafter Weise eine verbesserte Funktion der vorgeschlagenen Vorrichtung, insbesondere der Doppelfunktion der Kommutierungsschaltung, erreicht werden.

Hierbei wird das resonante Netzwerk durch die gegengekoppelten induktiven Elemente, das zusätzliche induktive Element und durch zumindest eine oder alle Beschaltungskapazitäten der Leistungsschalter der Leistungshalbbrücke gebildet.

Die vorhergehend vorgeschlagene Ausführungsform wird hierbei vorzugsweise bei Verwendung einer als Null- Spannung-Schaltung ausgebildeten Kommutierungsschaltung verwendet.

In einer alternativen Ausführungsform ist ein Mittelpunkt einer Leistungshalbbrücke elektrisch mit einem Mittelpunkt der zwei gegengekoppelten induktiven Elemente verbunden. Hierbei ist zwischen dem Mittelpunkt der Leistungshalbbrücke und dem Mittelpunkt der zwei gegengekoppelten induktiven Elemente ein zusätzliches kapazitives Element mit einer vorbestimmten Kapazität angeordnet. Hierbei wird das resonante Netzwerk durch die gegengekoppelten Induktivitäten und das zusätzliche kapazitive Element gebildet.

Die vorhergehend erläuterte Ausführungsform wird in vorteilhafter Weise bei einer als Null-Stromschaltung ausgeführten Kommutierungsschaltung verwendet.

In einer alternativen Ausführungsform ist ein Mittelpunkt einer Leistungshalbbrücke elektrisch mit einem Mittelpunkt der zwei gegengekoppelten induktiven Elemente verbunden. Hierbei ist zwischen dem Mittelpunkt der Leistungshalbbrücke und dem Mittelpunkt der gegengekoppelten induktiven Elemente ein zusätzliches induktives Element mit einer vorbestimmten Induktivität angeordnet, wobei das zusätzliche induktive Element als eine Primärspule eines Transformators ausgebildet ist.

Die Vorrichtung kann hierbei eine zusätzliche weitere Kommutierungsvollbrücke umfassen, wobei in deren Brückenzweig eine Sekundärspule des Transformators angeordnet ist. Ein Ausgang der zusätzlichen Kommutierungsvollbrücke kann hierbei elektrisch mit einem Gleichspannungs-Zwischenkreis eines Ladegerätes verbunden sein. Hierdurch ergibt sich in vorteilhafter Weise, dass ein Laden der Traktionsbatterie mit Potentialtrennung durchführbar ist, wobei der Transformator die Potentialtrennung ermöglicht. Weist die Vorrichtung einen Netzanschluss auf, so kann mit der vorgeschlagenen Vorrichtung in vorteilhafter Weise ein nicht potentialfreies Aufladen, also durch einen direkten Netzanschluss, sowie ein potentialfreies Laden erfolgen.

Weiter kann in vorteilhafter Weise durch die Verwendung einer weiteren Kommutierungsvollbrücke, insbesondere im Fall einer Null-Strom-Schaltung, eine Schaltzeit der Leistungsschalter verkürzt werden. Durch die Kommutierungsvollbrücke kann ein Zwischenkondensator, der Teil eines resonanten Netzwerks ist, so umgepolt werden, dass nur eine Halbschwingung nötigt ist, um eine für den nächsten Schaltzyklus geeignete Polarität und Ladung zu erreichen. Anderseits können der Transformator und die zusätzliche Kommutierungsvollbrücke die Funktion der vorhergehend erläuterten saturierbare Spule, insbesondere im Falle einer Null-Spannung-Schaltung, verwendet werden. Hierbei wird schaltungstechnisch anstelle der saturierbaren Spule die Schaltung aus Transformator und Kommutierungsvollbrücke angeordnet. Des Weiteren lässt sich mit dieser Ausführungsform eine Kombination beider Schaltentlastungsstrategien realisieren.

In einer weiteren Ausführungsform ist in dem Brückenzweig der Kommutierungsvollbrücke mindestens ein weiteres kapazitives Element mit einer vorbestimmten Kapazität angeordnet. Diese bilden in vorteilhafter Weise die Schwingkreiskondensatoren für ein Null-Strom-Schalten aus.

Weiter vorgeschlagen wird ein Verfahren zum Laden mindestens einer Traktionsbatterie eines Elektrofahrzeugs. Erfindungsgemäß wird mittels einer Kommutierungsschaltung eines Leistungsstromrichters eine externe Wechselspannung oder eine externe Gleichspannung in mindestens eine Gleichspannung zum Laden der Traktionsbatterie umgewandelt.

Hierdurch ergibt sich in vorteilhafter Weise, dass eine Kommutierungsschaltung sowohl zum Kommutieren von Leistungsschaltern des Leistungsstromrichters als auch zum Laden der Traktionsbatterie verwendet werden kann.

Auch vorgeschlagen wird ein Verfahren zum Betrieb einer Elektromaschine, wobei mittels mindestens einer Kommutierungsschaltung eines Leistungsstromrichters ein Strom und/oder eine Spannung einer Elektromaschine eingestellt wird. Hierbei kann der Strom und/oder die Spannung anstelle von Leistungsschaltern des Leistungsstromrichters durch Kommutierungsschalter der Kommutierungsschaltung eingestellt werden. Insbesondere kann der Strom und/oder Spannung beim Stromnulldurchgang oder in einem Teillastbetrieb der Elektromaschine eingestellt werden. Dieses Verfahren lässt sich allgemein beim Betrieb von auf Stromrichtern mit Kommutierungsschaltungen anwenden.

Die Erfindung wird anhand mehrerer Ausführungsbeispiele näher erläutert. Die Fig. zeigen:
- Fig. 1: ein schematisches Blockschaltbild eines Traktionsnetzes eines Elektrofahrzeugs,
- Fig. 2a: ein schematisches Schaltbild einer Kommutierungsschaltung in einer ersten Ausführungsform,
- Fig. 2b: ein schematisches Schaltbild einer Kommutierungsschaltung in einer zweiten Ausführungsform,
- Fig. 3: ein schematisches Schaltbild eines Traktionsnetzes,
- Fig. 4: ein schematisches Schaltbild eines Traktionsnetzes mit angeschlossener Stromversorgung,
- Fig. 5a: das in Fig. 2a dargestellte Schaltbild mit Motor- und Ladegerätanschlüssen,
- Fig. 5b: das in Fig. 2b dargestellte Schaltbild mit Motor- und Ladegerätanschlüssen,
- Fig. 6: ein schematisches Schaltbild einer Kommutierungsschaltung in einer dritten Ausführungsform,
- Fig. 7: ein schematisches Schaltbild einer Kommutierungsschaltung in einer vierten Ausführungsform,
- Fig. 8: ein schematisches Schaltbild eines Traktionsnetzes mit einem induktiven Ladegerät,
- Fig. 9: ein schematisches Schaltbild einer Kommutierungsschaltung in einer fünften Ausführungsform und
- Fig. 10: ein schematisches Schaltbild einer Kommutierungsschaltung in einer sechsten Ausführungsform.

Nachfolgend bezeichnen gleiche Bezugszeichen Elemente mit gleichen oder ähnlichen technischen Eigenschaften.

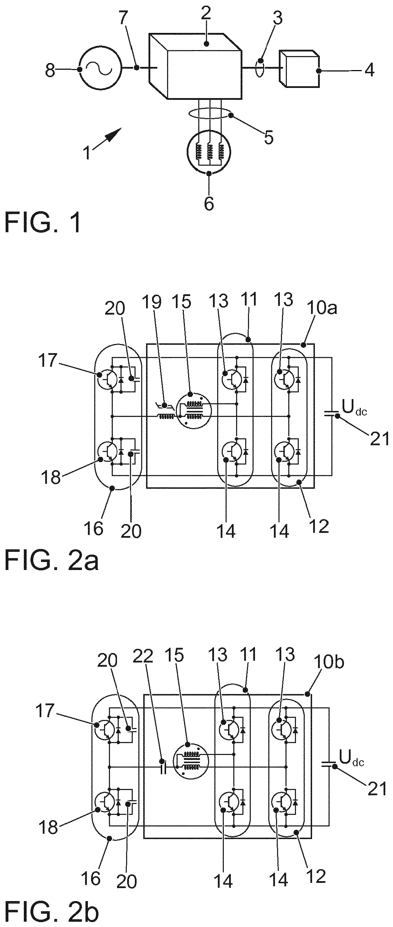

Fig. 1 zeigt ein schematisches Blockschaltbild eines Traktionsnetzes 1 eines Elektrofahrzeuges. Das Traktionsnetz 1 umfasst einen Leistungsstromrichter 2, der als dreiphasiger Leistungsstromrichter 2 ausgebildet ist. Weiter umfasst das Traktionsnetz 1 einen Traktionsbatterieanschluss 3 und eine Traktionsbatterie 4. Weiter umfasst das Traktionsnetz 1 drei Motoranschlüsse 5 und eine Elektromaschine 6 zum Antrieb des Elektrofahrzeugs. Weiter umfasst das Traktionsnetz 1 einen Anschluss 7 zur Verbindung mit einem Wechselspannungs-Versorgungsnetz, der im Folgenden auch als Ladegerätanschluss 7 bezeichnet wird. Weiter dargestellt ist ein externes Wechselspannungs-Versorgungsnetz 8.

Der Leistungsstromrichter 2 umfasst eine nicht in Fig. 1 dargestellte Kommutierungsschaltung, wobei mittels der Kommutierungsschaltung eine externe Wechselspannung, die am Ladegerätanschluss 7 anliegt, in eine Gleichspannung zum Laden der Traktionsbatterie 4 umwandelbar ist.

In Fig. 2a ist ein schematisches Schaltbild einer Kommutierungsschaltung 10a dargestellt. Die Kommutierungsschaltung 10a ist als so genannte Null-Spannung-Kommutierungsschaltung ausgebildet. Die Kommutierungsschaltung 10a umfasst eine erste Kommutierungshalbbrücke 11 und eine hierzu parallel geschaltete zweite Kommutierungshalbbrücke 12. Jede Kommutierungshalbbrücke 11, 12 umfasst einen so genannten Highside-Schalter 13 und einen so genannten Lowside-Schalter 14, zu denen jeweils parallel eine Freilaufdiode geschaltet ist. In einen Brückenzweig der Kommentierungsschaltung 10a sind zwei gegengekoppelte induktive Elemente angeordnet, die als negativ gekoppeltes Spulenpaar 15 ausgebildet sind. Der Brückenzweig verbindet hierbei einen Mittelpunkt der ersten Kommutierungshalbbrücke 11 und der zweiten Kommutierungshalbbrücke 12. Ebenfalls dargestellt ist eine Leistungshalbbrücke 16 des Leistungsstromrichters 2. Diese Leistungshalbbrücke 16 umfasst einen Highside-Schalter 17 und einen Lowside-Schalter 18, die beispielsweise als IGBT ausgebildet sein können. Weiter umfasst die Kommutierungsschaltung 10a eine saturierbare Spule 19, die schaltungstechnisch zwischen einem Mittelpunkt der Leistungshalbbrücke 16 und einem Mittelpunkt des negativ gekoppelten Spulenpaars 15 angeordnet ist.

Der Highside-Schalter 17 und der Lowside-Schalter 18 sind Leistungs- oder Hauptschalter des Leistungsstromrichters 2. Die Kommutierungsschaltung 10a bildet ein resonantes Netzwerk, wobei eine Induktivität des resonanten Netzwerks teilweise durch das negativ gekoppelte Spulenpaar 15 gebildet wird oder als negativ gekoppeltes Spulenpaar 15 ausgeführt ist. Dies ist für eine Verwendung der Kommutierungsschaltung 10a in einem Ladebetrieb von Vorteil. Durch die negative Kopplung wird eine verhältnismäßig kleine Streuinduktivität des negativ gekoppelten Spulenpaares 15 für den Kommutierungsvorgang verwendet. Hieraus resultiert eine für schnelle Schaltvorgänge ausreichend große Resonanzfrequenz bei zugleich ausreichend großer Eigeninduktivität, um in dem Ladebetrieb die Phasenstromwelligkeit zu begrenzen. Die saturierbare Spule 19 ermöglicht in vorteilhafter Weise, dass die Entstehung von Verlusten durch zirkulierende Ströme begrenzt wird. Weiter ist anzumerken, dass ein kapazitives Element des resonanten Netzwerks durch Beschaltungskondensatoren 20 des Highside-Schalters 17 und des Lowside-Schalters 18 gebildet wird.

Weiter dargestellt ist eine Zwischenkreisspannung U_{dc} des Traktionsnetzes 1. Die Zwischenkreisspannung U_{dc} fällt hierbei über einen Zwischenkreiskondensator 21 ab.

In Fig. 2b ist eine zweite Ausführungsform einer Kommutierungsschaltung 10b in einem Schaltbild schematisch dargestellt. Hinsichtlich eines Aufbaus der Kommutierungsschaltung 10b kann auf die Erläuterungen zu Fig. 2a verwiesen werden. Im Unterschied zu der in Fig. 2a dargestellten Kommutierungsschaltung 10a ist jedoch zwischen einen Mittelpunkt der Leistungshalbbrücke 16 und einem Mittelpunkt des negativ gekoppelten Spulenpaares 15 ein Kondensator 22 geschaltet. Dieser bildet ein kapazitives Element des durch die Kommutierungsschaltung 10b ausgebildeten resonanten Netzwerkes. Die Kommutierungsschaltung 10b ist hierbei als so genannte Null-Strom-Schaltung ausgeführt.

Das resonante Netzwerk wird somit von einem LC-Schwingkreis gebildet, bestehend aus einer Reihenschaltung des negativ gekoppelten Spulenpaars 15 und des Kondensators 22.

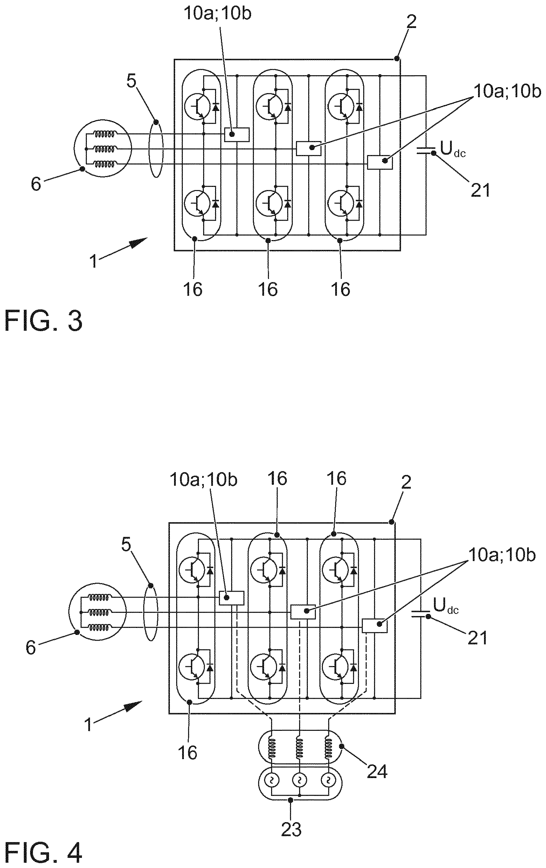

In Fig. 3 ist ein schematisches Schaltbild eines Traktionsnetzes 1 dargestellt. Dargestellt sind u.a. drei Leistungshalbbrücken 16 eines Leistungsstromrichters 2. Weiter dargestellt sind drei Motoranschlüsse 5 sowie eine Elektromaschine 6. Schematisch dargestellt sind Kommutierungsschaltungen, die entweder als die in Fig. 2a dargestellte Kommutierungsschaltung 10a oder die in Fig. 2b dargestellte Kommutierungsschaltung 10b ausgeführt sein können. Hierbei ist jeder Leistungshalbbrücke 16 jeweils eine Kommutierungsschaltung 10a, 10b zugeordnet, die elektrisch parallel zu der jeweiligen Leistungshalbbrücke 16 geschaltet ist. Dargestellt ist weiter, dass ein Mittelpunkt der Leistungshalbbrücken 16 jeweils mit einem der drei Motoranschlüsse 5 elektrisch verbunden ist.

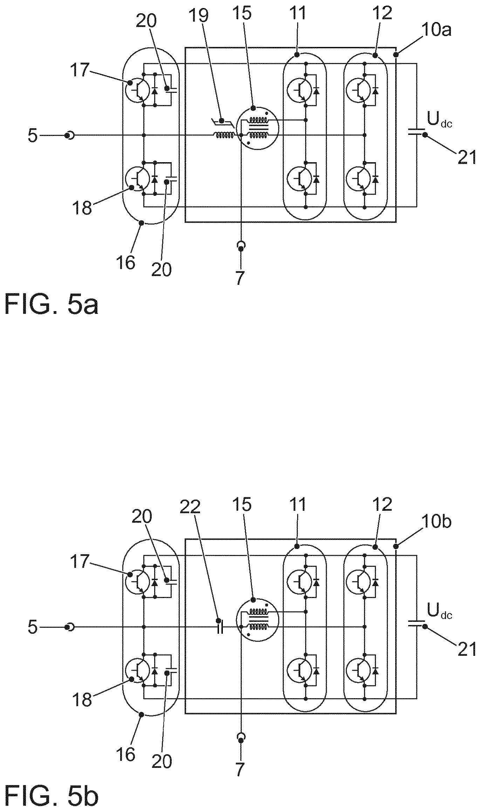

In Fig. 4 ist ein schematisches Blockschaltbild eines Traktionsnetzes 1 mit einer angeschlossenen dreiphasigen Spannungsversorgung 23 dargestellt. Hierbei ist dargestellt, dass die externe dreiphasige Spannungsversorgung 23 über Ladeanschlussinduktivitäten 24, die beispielsweise als Spulen ausgeführt sein können, an z.B. in Fig. 5a und 5b dargestellte Ladegerätanschlüsse 7 der Kommutierungsschaltungen 10a, 10b angeschlossen sind. Die Verwendung der in Fig. 2a und 2b dargestellten negativ gekoppelten Spulen 15 ermöglicht in vorteilhafter Weise, dass eine Induktivität der Ladeanschlussinduktivitäten 24 geringer ausgelegt werden kann als bei einem z.B. ausschließlich durch eine Ladeanschlussinduktivität 24 und eine Leistungshalbbrücke 16 gebildeten Ladestromrichter. Hierdurch ergibt sich ein geringerer Bauraumbedarf sowie geringere Kosten zur Realisierung der Ladeanschlussinduktivitäten 24.

Mit Vorteil werden die Ladegerätanschlüsse 7 zur Verbindung mit der dreiphasigen Stromversorgung 23 mit zusätzlichen Spulen (Ladeanschlussinduktivitäten 24) beschaltet. Hierdurch kann ein Oberwellengehalt von Ladeströmen verringert werden. Dies kann vorteilhaft sein, um einen Störeinfluss auf das Versorgungsnetz zu verringern und für das Versorgungsnetz festgelegte Spezifikationen einzuhalten.

Die Darstellungen in Fig. 3 und Fig. 4 beziehen sich auf eine Elektromaschine 6, z.B. einen Elektromotor, sowie ein Wechselspannungs-Versorgungsnetz mit jeweils drei Phasen. Es ist festzustellen, dass die vorliegende Erfindung auch für eine andere Anzahl von Phasen einsetzbar ist. Insbesondere kann die Erfindung mit Versorgungsnetzen eingesetzt werden, die nur eine Wechselspannungsphase aufweisen.

In Fig. 5a ist die in Fig. 2a dargestellte Kommutierungsschaltung 10a mit einem Ladegerätanschluss 7 dargestellt. Bezüglich eines schaltungstechnischen Aufbaus der Kommutierungsschaltung 10a wird hierbei auf die Erläuterungen zu Fig. 2a verwiesen. Dargestellt ist, dass der Ladegerätanschluss 7 elektrisch mit einem Mittelpunkt des negativ gekoppelten Spulenpaares 15 verbunden ist. An den Ladegerätanschluss 7 kann eine (einphasige) Wechselspannung eines externen Wechselspannungs-Versorgungsnetzes (siehe Fig. 1) oder eine Phase einer dreiphasigen Spannungsversorgung 23 (siehe Fig. 4) angelegt werden. In diesem Fall bilden das negativ gekoppelte Spulenpaar 15 und die parallel geschalteten Kommutierungshalbbrücken 11, 12 sowie gegebenenfalls eine der in Fig. 4 dargestellten Ladeanschlussinduktivitäten 24 einen Ladestromrichter, der die externe Wechselspannung in eine Gleichspannung zum Laden der nicht in Fig. 5a dargestellten Traktionsbatterie umwandelt. Weiter dargestellt ist ein Motoranschluss 5 für eine Phase einer Elektromaschine 6 (siehe beispielsweise Fig. 4). Dieser ist elektrisch mit einem Mittelpunkt einer Leistungshalbbrücke 16 verbunden.

In Fig. 5b ist eine Kommutierungsschaltung 10b aus Fig. 2b mit einem Ladegerätanschluss 7 und einem Motoranschluss 5 dargestellt. Hinsichtlich eines schaltungstechnischen Aufbaus der Kommutierungsschaltung 10b wird auf die Erläuterungen zu Fig. 2b verwiesen. Der Ladegerätanschluss 7 ist elektrisch mit einem Mittelpunkt des negativ gekoppelten Spulenpaares 15 verbunden. Wie zu Fig. 5a erläutert, ermöglicht der Ladegerätanschluss 7, z. B. den Anschluss einer Phase eines externen Wechselspannungs-Versorgungsnetzes, welches eine Wechselspannung zur Verfügung stellt. Ebenfalls analog zu Fig. 5a ist der Motoranschluss 5 elektrisch mit einem Mittelpunkt einer Leistungshalbbrücke 16 verbunden.

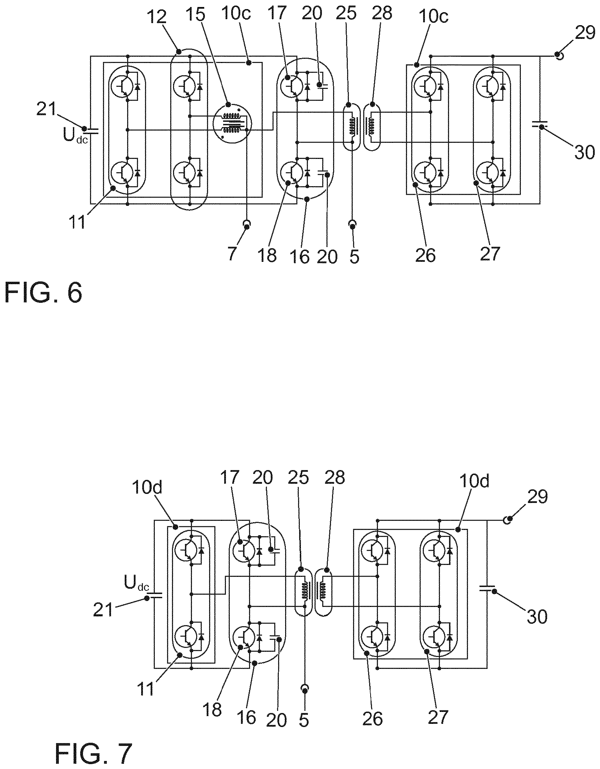

In Fig. 6 ist eine dritte Ausführungsform einer Kommutierungsschaltung 10c dargestellt. Hierbei umfasst die Kommutierungsschaltung 10c eine erste Kommutierungshalbbrücke 11, eine zweite Kommutierungshalbbrücke 12 und ein negativ gekoppeltes Spulenpaar 15. Die erste und die zweite Kommutierungshalbbrücke 11, 12 sind elektrisch parallel zu einem Zwischenkreiskondensator 21 geschaltet. Das negativ gekoppelte Spulenpaar 15 ist in einem Brückenzweig der von der ersten Kommutierungshalbbrücke 11 und der zweiten Kommutierungshalbbrücke 12 gebildeten Kommutierungsvollbrücke geschaltet. Ein Ladegerätanschluss 7 ist elektrisch mit einem Mittelpunkt des negativ gekoppelten Spulenpaares 15 verbunden. Weiter dargestellt ist eine Leistungshalbbrücke 16, die elektrisch parallel zu dem Zwischenkreiskondensator 21 geschaltet ist. Zwischen einem Mittelpunkt des negativ gekoppelten Spulenpaares 15 und einem Mittelpunkt der Leistungshalbbrücke 16 ist schaltungstechnisch eine Primärspule 25 eines Transformators angeordnet.

Weiter umfasst die Kommutierungsschaltung 10c eine dritte Kommutierungshalbbrücke 26 und eine vierte Kommutierungshalbbrücke 27, die zusammen eine weitere Kommutierungsvollbrücke ausbilden. In einem Brückenzweig dieser weiteren Kommutierungsvollbrücke ist eine Sekundärspule 28 des Transformators angeordnet. Ein Spannungsausgang 29 der von der dritten und vierten Kommutierungshalbbrücke 26, 27 gebildeten weiteren Kommutierungsvollbrücke ist mit einem Zwischenkreiskondensator 30 eines Zwischenkreises eines Ladegerätes (nicht dargestellt) elektrisch verbunden. Der Vorteil der in Fig. 6 dargestellten Schaltung liegt bei einem Null-Strom-Schalten in einem vereinfachten und verkürzten Kommutierungsvorgang der Hauptschalter, also des Highside-Schalters 17 und des Lowside-Schalters 18 der Leistungshalbbrücke 16. Durch die Kommutierungshalbbrücken 26, 27 kann ein Zwischenkondensator 30, der Teil eines resonanten Netzwerks ist, so umgepolt werden, dass nur eine Halbschwingung nötigt ist, um eine für den nächsten Schaltzyklus geeignete Polarität und Ladung zu erreichen. Anderseits können die Primär- und Sekundärspule 25, 28 und die Kommutierungshalbbrücken 26, 27 anstelle einer saturierbaren Spule 15 (siehe z.B. Fig. 2) für eine Null-Spannung-Schaltung verwendet werden. Des Weiteren lässt sich mit dieser Ausführungsform eine Kombination beider Schaltentlastungsstrategien realisieren. In der dargestellten Form kann die weitere Kommutierungsvollbrücke auch als DC/DC-Wandler, vorzugsweise als Tiefsetzsteller, eingesetzt werden. Der Spannungsausgang 29, an dem eine Gleichspannung abgegriffen werden kann, kann beispielsweise auch als Anschluss für ein Gleichspannungsbordnetz des Elektrofahrzeuges dienen. Die Primärspule 25 und die Sekundärspule 28 sind hierbei ebenfalls Teil der Kommutierungsschaltung 10c.

In Fig. 7 ist ein schematisches Schaltbild einer vierten Ausführungsform einer Kommutierungsschaltung 10d dargestellt. Die Kommutierungsschaltung 10d umfasst hierbei eine erste Kommutierungshalbbrücke 11. Diese ist elektrisch parallel zu einem Zwischenkreiskondensator 21 eines z.B. in Fig. 1 dargestellten Traktionsnetzes 1 geschaltet. Weiter dargestellt ist eine Leistungshalbbrücke 16, die einen Highside-Schalter 17 und einen Lowside-Schalter 18 umfasst, und ebenfalls elektrisch parallel zu dem Zwischenkreiskondensator 21 geschaltet ist. Ein Mittelpunkt der ersten Kommutierungshalbbrücke 11 ist über eine Primärspule 25 eines Transformators elektrisch mit einem Mittelpunkt der Leistungshalbbrücke 16 verbunden. Weiter umfasst die Kommutierungsschaltung 10d eine dritte und eine vierte Kommutierungshalbbrücke 26, 27, die eine Kommutierungsvollbrücke ausbilden und in deren Brückenzweig eine Sekundärspule 28 des Transformators angeordnet ist. In dieser Ausführungsform umfasst die Kommutierungsschaltung 10d keine zweite Kommutierungshalbbrücke 12 (siehe z.B. Fig. 6), die elektrisch parallel zu der ersten Kommutierungshalbbrücke 11 und der Leistungshalbbrücke 16 geschaltet ist. Die in Fig. 7 dargestellte Schaltung kommt in vorteilhafter Weise mit einer reduzierten Zahl von Halbleiterbauelementen aus. Durch die durch den Transformator ausgebildete galvanische Entkopplung eignet sich die in Fig. 7 dargestellte Schaltung zur Integration von Ladegeräten mit Potentialtrennung. Hierbei kann ein Ladegerät, insbesondere ein Gleichspannungs-Zwischenkreis des Ladegerätes, an einen Spannungseingang 29 der von der dritten und vierten Kommutierungshalbbrücke 26, 27 gebildeten Kommutierungsvollbrücke angeschlossen werden. Ein mit einer Potentialtrennung vorgesehene DC-DC-Wandler des Ladegerätes wird hierbei also durch die Primär- und Sekundärspule 25, 28 sowie die erste Kommutierungshalbbrücke 11, und die dritten und vierten Kommutierungshalbbrücke 26, 27 ausgebildet. Dabei können z.B. beim Aufladen der Traktionsbatterie 4 (siehe z.B. Fig. 1) die Motoranschlüsse 5 z.B. über die Lowside-Schalter 18 kurzgeschlossen werden. Die Primärspule 25 und die Sekundärspule 28 sind hierbei ebenfalls Teil der Kommutierungsschaltung 10c.

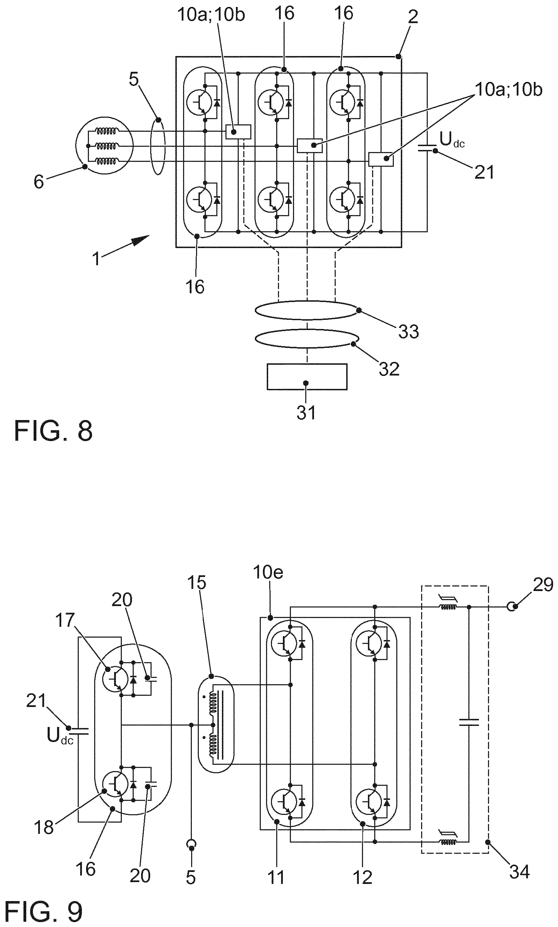

In Fig. 8 ist ein schematisches Blockschaltbild eines Traktionsnetzes 1 dargestellt, wobei die fahrzeugseitigen Schaltungen eines induktiven Ladengerätes als Teil der Kommutierungsschaltungen des Leistungsstromrichters 2 (siehe Fig. 1) verwendet werden. Hinsichtlich eines schaltungstechnischen Aufbaus des Traktionsnetzes 1 kann hierbei auf die Erläuterungen zu Fig. 4 verwiesen werden. Das induktive Ladegerät umfasst netzseitige Schaltungen 31, eine oder mehrere netzseitige Primärspulen 32 und eine oder mehrere fahrzeugseitige Sekundärspulen 33. Das induktive Ladegerät ist über die netzseitigen Primärspulen 32 und die fahrzeugseitigen Sekundärspulen 33 induktiv mit dem Traktionsnetz 1 gekoppelt. Netzseitige Schaltungen 31 des induktiven Ladegeräts sowie die Spulen 32, 33 und die Kommutierungsschaltungen des Leistungsstromrichters 2 ermöglichen ein induktives Laden einer z.B. in Fig. 1 dargestellten Traktionsbatterie 4.

In Fig. 9 ist eine fünfte Ausführungsform einer Kommutierungsschaltung 10e dargestellt, die in vorteilhafter Weise ein induktives Laden einer Traktionsbatterie 4 (siehe Fig. 1) ermöglicht. Die Kommutierungsschaltung 10e umfasst eine erste Kommutierungshalbbrücke 11 und eine zweite Kommutierungshalbbrücke 12, die eine Kommutierungsvollbrücke bilden. In einem Brückenzweig der Kommutierungsvollbrücke ist ein negativ gekoppeltes Spulenpaar 15 angeordnet. Die Spulen des negativ gekoppelten Spulenpaares 15 bilden hierbei eine oder mehrere Sekundärspulen 33 (siehe Fig. 8), z.B. eines Übertragers, eines induktiven Ladegeräts aus. Ein Mittelpunkt des negativ gekoppelten Spulenpaares 15 ist elektrisch mit einer Phase eines Motoranschlusses 5 und einem Mittelpunkt einer Leistungshalbbrücke 16 verbunden, wobei die Leistungshalbbrücke 16 elektrisch parallel zu einem Zwischenkreiskondensator 21 geschaltet ist. Die Kommutierungsvollbrücke, die von der ersten und der zweiten Kommutierungshalbbrücke 11, 12 gebildet wird, bildet mit einer Filterschaltung 34 einen Gleichrichter des induktiven Ladegerätes, womit einen Strom bzw. eine Spannung zum Aufladen einer Traktionsbatterie gestellt werden kann. Das negativ gekoppelte Spulenpaar 15 und die Filterschaltung 34 sind hierbei ebenfalls Teil der Kommutierungsschaltung 10e.

Die Erfindung lässt sich also in vorteilhafter Weise auch mit induktiven Ladegeräten verwenden. Hierbei wird eine Energie aus einem Versorgungsnetz nicht elektrisch, sondern (z.B. drahtlos) induktiv übertragen. Eine prinzipielle Anbindung eines induktiven Ladegeräts für das erfindungsgemäße Aufladen einer Traktionsbatterie über eine Kommutierungsschaltung 10e (siehe Fig. 9) ist in Fig. 8 dargestellt.

Die in Fig. 9 dargestellte Kommutierungsschaltung 10e ist hierbei als Null-Spannungs-Kommutierungsschaltung ausgebildet.

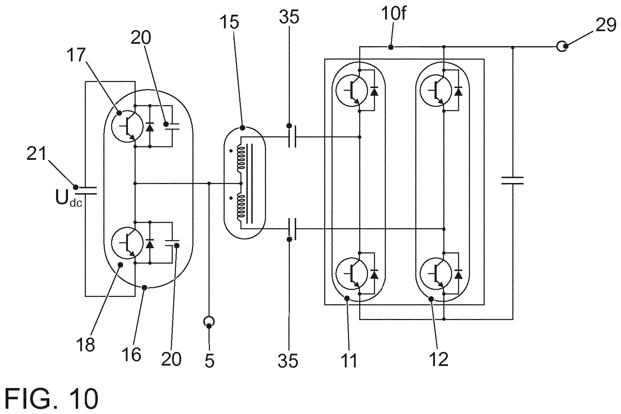

In Fig. 10 ist eine sechste Ausführungsform einer Kommutierungsschaltung 10f dargestellt. Diese ist im Wesentlichen schaltungstechnisch gleich der in Fig. 9 dargestellten Kommutierungsschaltung 10e ausgebildet. Hinsichtlich eines schaltungstechnischen Aufbaus kann daher auf die Erläuterungen zu Fig. 9 verwiesen werden. Als einzigen Unterschied zum schaltungstechnischen Aufbau der in Fig. 9 dargestellten Kommutierungsschaltung 10e sind in einem Brückenzweig einer von einer ersten Kommutierungshalbbrücke 11 und einer zweiten Kommutierungshalbbrücke 12 gebildeten Kommutierungsvollbrücke zusätzlich zu einem negativ gekoppelten Spulenpaar 15 Kondensatoren 35 angeordnet. Somit ist die in Fig. 10 dargestellte Kommutierungsschaltung 10f als Null-Strom-Kommutierungsschaltung ausgebildet. Das negativ gekoppelte Spulenpaar 15 und die Kondensatoren 35 sind hierbei ebenfalls Teil der Kommutierungsschaltung 10f.

### Bezugszeichenliste

- 1: Traktionsnetz
- 2: Leistungsstromrichter
- 3: Traktionsbatterieanschluss
- 4: Traktionsbatterie
- 5: Motoranschluss
- 6: Elektromaschine
- 7: Anschluss, Ladegerätanschluss
- 8: externes Versorgungsnetz
- 10a: Kommutierungsschaltung
- 10b: Kommutierungsschaltung
- 10c: Kommutierungsschaltung
- 10d: Kommutierungsschaltung
- 10e: Kommutierungsschaltung
- 10f: Kommutierungsschaltung
- 11: erste Kommutierungshalbbrücke
- 12: zweite Kommutierungshalbbrücke
- 13: Highside-Schalter einer Kommutierungshalbbrücke
- 14: Lowside-Schalter einer Kommutierungshalbbrücke
- 15: negativ gekoppeltes Spulenpaar
- 16: Leistungshalbbrücke
- 17: Highside-Schalter einer Leistungshalbbrücke
- 18: Lowside-Schalter einer Leistungshalbbrücke
- 19: saturierbare Spule
- 20: Beschaltungskapazität
- 21: Zwischenkreiskondensator
- 22: Kondensator
- 23: dreiphasige Stromversorgung
- 24: Ladeanschlussinduktivitäten
- 25: Primärspule
- 26: dritte Kommutierungshalbbrücke
- 27: vierte Kommutierungshalbbrücke
- 28: Sekundärspule
- 29: Anschluss
- 30: Kondensator
- 31: netzseitige Schaltungen eines induktiven Ladegeräts
- 32: Primärspule
- 33: Sekundärspule
- 34: Filterschaltung
- 35: Kondensator

## Patentansprüche

1. Vorrichtung zum Laden mindestens einer Traktionsbatterie (4) eines Elektrofahrzeugs, wobei die Vorrichtung mindestens einen Traktionsbatterieanschluss (3) und eine an den Traktionsbatterieanschluss (3) angeschlossene Traktionsbatterie (4), einen Leistungsstromrichter (2) und mindestens einen Motoranschluss (5) für eine Phase einer Elektromaschine (6) und eine an den Motoranschluss (5) angeschlossene Elektromaschine (6) aufweist, wobei der Leistungsstromrichter (4) mindestens eine als Ladestromrichter oder Ladeumrichter betreibbare Kommutierungsschaltung (10a, 10b, 10c, 10d, 10e, 10f) aufweist, wobei die Kommutierungsschaltung (10a, 10b, 10c, 10d, 10e, 10f) derart schaltungstechnisch angeordnet ist, dass sie eine Schaltung von Leistungsschaltern (17, 18) des Leistungsstromrichters (2) mit Null-Spannung und/oder Null-Strom ermöglicht, wobei mittels der mindestens einen Kommutierungsschaltung (10a, 10b, 10c, 10d, 10e, 10f) eine externe Wechselspannung oder eine externe Gleichspannung in mindestens eine Gleichspannung zum Laden der Traktionsbatterie (4) umwandelbar ist,
**dadurch gekennzeichnet, dass** die Kommutierungsschaltung (10a, 10b, 10c, 10d, 10e, 10f) mindestens zwei gegengekoppelte induktive Elemente und mindestens eine erste Kommutierungshalbbrücke (11) umfasst, wobei die gegengekoppelten induktiven Elemente negativ gekoppelt sind, wobei die Kommutierungsschaltung (10a, 10b, 10c, 10e, 10f) eine weitere Kommutierungshalbbrücke (12) umfasst, wobei die mindestens zwei gegengekoppelten induktiven Elemente in einem Brückenzweig zwischen der ersten Kommutierungshalbbrücke (11) und der mindestens einen weiteren Kommutierungshalbbrücke geschaltet sind, wobei eine externe Versorgungsspannung mit einem Ladegerätanschluss (7) der Kommutierungsschaltung (10a, 10b, 10c, 10d, 10e, 10f) koppelbar ist, der elektrisch mit dem Mittelpunkt der gegengekoppelten induktiven Elemente verbunden ist.

2. Vorrichtung nach Anspruch 1, **dadurch gekennzeichnet, dass** ein erstes induktives Element und ein zweites induktives Element der gegengekoppelten induktiven Elemente als Teil einer Sekundär-Spule (33) eines induktiven Ladegeräts (31) ausgebildet sind.

3. Vorrichtung nach einem der Ansprüche 1 bis 2, **dadurch gekennzeichnet, dass** ein Mittelpunkt einer Leistungshalbbrücke (16) elektrisch mit einem Mittelpunkt der zwei gegengekoppelten induktiven Elemente verbunden ist, wobei zwischen dem Mittelpunkt der Leistungshalbbrücke (16) und dem Mittelpunkt der zwei gegengekoppelten induktiven Elemente ein zusätzliches induktives Element mit einer vorbestimmten Induktivität angeordnet ist.

4. Vorrichtung nach einem der Ansprüche 1 bis 4, **dadurch gekennzeichnet, dass** ein Mittelpunkt einer Leistungshalbbrücke (16) elektrisch mit einem Mittelpunkt der zwei gegengekoppelten induktiven Elemente verbunden ist, wobei zwischen dem Mittelpunkt der Leistungshalbbrücke (16) und dem Mittelpunkt der zwei gegengekoppelten induktiven Elemente ein zusätzliches kapazitives Element mit einer vorbestimmten Kapazität angeordnet ist.

5. Vorrichtung nach einem der Ansprüche 1 oder 2, **dadurch gekennzeichnet, dass** ein Mittelpunkt einer Leistungshalbbrücke (16) elektrisch mit einem Mittelpunkt der zwei gegengekoppelten Elemente verbunden ist, wobei zwischen dem Mittelpunkt der Leistungshalbbrücke (16) und dem Mittelpunkt der zwei gegengekoppelten induktiven Elemente ein zusätzliches induktives Element mit einer vorbestimmten Induktivität angeordnet ist, wobei das zusätzliche induktive Element als eine primäre TransformatorSpule (25) eines Transformators ausgebildet ist.

6. Vorrichtung nach einem der vorangegangenen Ansprüche, **dadurch gekennzeichnet, dass** in dem Brückenzweig mindestens ein zusätzliches kapazitives Element mit einer vorbestimmten Kapazität angeordnet ist.

7. Verfahren zum Laden mindestens einer Traktionsbatterie eines Elektrofahrzeugs mit einer Vorrichtung gemäß einem der Ansprüche 1 bis 6, wobei mittels mindestens einer als Ladestromrichter oder Ladeumrichter betreibbaren Kommutierungsschaltung (10a, 10b, 10c, 10d, 10e, 10f) eines Leistungsstromrichters (2) eine externe Wechselspannung oder eine externe Gleichspannung in mindestens eine Gleichspannung zum Laden einer Traktionsbatterie (4) umgewandelt wird, wobei eine externe Versorgungsspannung mit einem Ladegerätanschluss (7) der Kommutierungsschaltung (10a, 10b, 10c, 10d, 10e, 10f) gekoppelt wird.

## Claims

1. An apparatus for charging at least one traction battery (4) of an electric vehicle, wherein the apparatus has at least one traction battery connection (3) and a traction battery (4) connected to the traction battery connection (3); a power converter (2); and at least one motor connection (5) for one phase of an electric machine (6); and an electric machine (6) connected to the motor connection (5), wherein the power converter (4) has at least one commutation circuit (10a, 10b, 10c, 10d, 10e, 10f), which can be operated as a charging current converter or charging converter; wherein the commutation circuit (10a, 10b, 10c, 10d, 10e, 10f) is arranged in terms of circuitry such that it enables a switching of power switches (17, 18) of the power converter (2) with zero voltage and/or zero current, wherein an external AC voltage or an external DC voltage can be converted, by means of the at least one commutation circuit (10a, 10b, 10c, 10d, 10e, 10f), into at least one DC voltage for charging the traction battery (4),
**characterized in that** the commutation circuit (10a, 10b, 10c, 10d, 10e, 10f) comprises at least two degenerative inductive elements and at least one first commutation half-bridge (11), wherein the degenerative inductive elements are negatively coupled; wherein the commutation circuit (10a, 10b, 10c, 10e, 10f) comprises a further commutation half-bridge (12); wherein the at least two degenerative inductive elements are connected in a bridge arm between the first commutation half-bridge (11) and the at least one further commutation half-bridge; wherein an external supply voltage can be coupled to a charger connection (7) of the commutation circuit (10a, 10b, 10c, 10d, 10e, 10f), which charger connection (7) is electrically connected to the center point of the degenerative inductive elements.

2. The apparatus according to claim 1, **characterized in that** a first inductive element and a second inductive element of the degenerative inductive elements are designed as part of a secondary coil (33) of an inductive charging device (31).

3. The apparatus according to any one of claims 1 to 2,
**characterized in that** a center point of a power half-bridge (16) is electrically connected to a center point of the two degenerative inductive elements, wherein an additional inductive element having a predetermined inductance is arranged between the center point of the power half-bridge (16) and the center point of the two degenerative inductive elements.

4. The apparatus according to any one of claims 1 to 4,
**characterized in that** a center point of a power half-bridge (16) is electrically connected to a center point of the two degenerative inductive elements, wherein an additional capacitive element having a predetermined capacitance is arranged between the center point of the power half-bridge (16) and the center point of the two degenerative inductive elements.

5. The apparatus according to any one of claims 1 or 2,
**characterized in that** a center point of a power half-bridge (16) is electrically connected to a center point of the two degenerative elements, wherein an additional inductive element having a predetermined inductance is arranged between the center point of the power half-bridge (16) and the center point of the two degenerative inductive elements, wherein the additional inductive element is designed as a primary transformer coil (25) of a transformer.

6. The apparatus according to any one of the preceding claims, **characterized in that** at least one additional capacitive element having a predetermined capacitance is arranged in the bridge arm.

7. A method for charging at least one traction battery of an electric vehicle with an apparatus according to any one of claims 1 to 6, wherein an external AC voltage or an external DC voltage is converted, by means of at least one commutation circuit (10a, 10b, 10c, 10d, 10e, 10f) of a power converter (2) which can be operated as a charging current converter or charging converter, into at least one DC voltage for charging a traction battery (4), wherein an external supply voltage is coupled to a charger connection (7) of the commutation circuit (10a, 10b, 10c, 10d, 10e, 10f).

## Revendications

1. Dispositif de charge d'au moins une batterie de traction (4) d'un véhicule électrique, dans lequel le dispositif présente au moins un connecteur de batterie de traction (3) et une batterie de traction (4) raccordée au connecteur de batterie de traction (3), un redresseur de puissance (2) et au moins un connecteur de moteur (5) pour une phase d'une machine électrique (6) et une machine électrique (6) raccordée au connecteur de moteur (5), dans lequel le redresseur de puissance (4) présente au moins un circuit de commutation (10a, 10b, 10c, 10d, 10e, 10f) pouvant fonctionner comme un redresseur de charge ou un convertisseur de charge, dans lequel le circuit de commutation (10a, 10b, 10c, 10d, 10e, 10f) est agencé selon la technique des circuits de manière à permettre d'obtenir un circuit de commutateurs de puissance (17, 18) du redresseur de puissance (2) avec une tension nulle et/ou un courant nul, dans lequel au moyen de l'au moins un circuit de commutation (10a, 10b, 10c, 10d, 10e, 10f), une tension alternative externe ou une tension continue externe peut être convertie en au moins une tension continue pour la charge de la batterie de traction (4),
**caractérisé en ce que** le circuit de commutation (10a, 10b, 10c, 10d, 10e, 10f) comprend au moins deux éléments inductifs à contre-réaction et au moins un premier demi-pont de commutation (11), dans lequel les éléments inductifs à contre-réaction sont couplés de manière négative, dans lequel le circuit de commutation (10a, 10b, 10c, 10e, 10f) comprend un autre demi-pont de commutation (12), dans lequel les au moins deux éléments inductifs à contre-réaction sont branchés dans une branche de pont entre le premier demi-pont de commutation (11) et l'au moins un autre demi-pont de commutation, dans lequel une tension d'alimentation externe peut être couplée à un connecteur d'appareil de charge (7) du circuit de commutation (10a, 10b, 10c, 10d, 10e, 10f), qui est relié électriquement avec le point médian des éléments inductifs à contre-réaction.

2. Dispositif selon la revendication 1, **caractérisé en ce qu'**un premier élément inductif et un second élément inductif des éléments inductifs à contre-réaction sont formés comme une partie d'une bobine secondaire (33) d'un appareil de charge inductif (31).

3. Dispositif selon l'une quelconque des revendications 1 à 2, **caractérisé en ce qu'**un point médian d'un demi-pont de puissance (16) est relié électriquement à un point médian des deux éléments inductifs à contre-réaction, dans lequel un élément inductif supplémentaire avec une inductance prédéfinie est agencé entre le point médian du demi-pont de puissance (16) et le point médian des deux éléments inductifs à contre-réaction.

4. Dispositif selon l'une quelconque des revendications 1 à 4, **caractérisé en ce qu'**un point médian d'un demi-pont de puissance (16) est relié électriquement à un point médian des deux éléments inductifs à contre-réaction, dans lequel un élément capacitif supplémentaire avec une capacité prédéfinie est agencé entre le point médian du demi-pont de puissance (16) et le point médian des deux éléments inductifs à contre-réaction.

5. Dispositif selon l'une quelconque des revendications 1 ou 2, **caractérisé en ce qu'**un point médian d'un demi-pont de puissance (16) est relié électriquement à un point médian des deux éléments à contre-réaction, dans lequel un élément inductif supplémentaire avec une inductance prédéfinie est agencé entre le point médian du demi-pont de puissance (16) et le point médian des deux éléments inductifs à contre-réaction, dans lequel l'élément inductif supplémentaire est conçu comme une bobine de transformateur primaire (25) d'un transformateur.

6. Dispositif selon l'une quelconque des revendications précédentes, **caractérisé en ce que** dans la branche de pont au moins un élément capacitif supplémentaire avec une capacité prédéfinie est agencé.

7. Procédé de charge d'au moins une batterie de traction d'un véhicule électrique comprenant un dispositif selon l'une quelconque des revendications 1 à 6, dans lequel, au moyen d'au moins un circuit de commutation (10a, 10b, 10c, 10d, 10e, 10f) pouvant fonctionner comme un redresseur de charge ou un convertisseur de charge d'un redresseur de puissance (2), une tension alternative externe ou une tension continue externe est convertie en au moins une tension continue pour la charge d'une batterie de traction (4), dans lequel une tension d'alimentation externe est couplée à un connecteur d'appareil de charge (7) du circuit de commutation (10a, 10b, 10c, 10d, 10e, 10f).
